# EUROPÄISCHE PATENTSCHRIFT

(11) **EP 1 269 820 B1**
(45) Veröffentlichungstag und Bekanntmachung des Hinweises auf die Patenterteilung: **28.02.2007**
(21) Anmeldenummer: 02013019.1
(22) Anmeldetag: 13.06.2002
(51) Int. Cl.: A01D 34/64

(54) **Aufhängung und Fahrzeug bzw. Gerät**
Support and vehicle in particular apparatus
Suspension et véhicule notamment appareil

(30) Priorität: 20.06.2001 US 885460
(43) Veröffentlichungstag der Anmeldung: 02.01.2003
(73) Patentinhaber: DEERE & COMPANY, Moline, Illinois 61265-8098 (US)
(72) Erfinder: Buss, Steven Henry, Horicon, WI 53032 (US)
(74) Vertreter: Magin, Ludwig Bernhard

(56) Entgegenhaltungen:
- DE-A- 4 336 492
- US-A- 3 706 186
- US-A- 5 025 617
- US-A- 5 528 889
- US-A- 5 956 932
- US-B1- 6 293 077
- PATENT ABSTRACTS OF JAPAN vol. 018, no. 647 (C-1283), 8. Dezember 1994 (1994-12-08) & JP 06 253639 A (KUBOTA CORP), 13. September 1994 (1994-09-13)

## Beschreibung

Die Erfindung betrifft eine Aufhängung zum höhenveränderlichen Anschließen eines Geräts an einen Rahmen eines Fahrzeugs, mit wenigstens einer Hubstrebe, welche sowohl mit dem Rahmen als auch mit einem Endbereich des Geräts schwenkbar verbindbar ist, und wenigstens einer Seitenstrebe, welche mit dem Rahmen und mit einem an dem gegenüberliegenden Endbereich des Geräts vorgesehenen Anschlussmittel schwenkbar verbindbar ist, und ein Gerät bzw. Fahrzeug zur Rasen-, Garten- und Grundstückspflege.

Fahrzeuge zur Rasen-, Garten- und Grundstückspflege können meist mit unterschiedlichen Anbaugeräten bzw. Geräten betrieben werden. Oftmals werden solche Geräte über einen gewissen Zeitraum verwendet und dann von dem Fahrzeug abgebaut, damit dieses mit anderen Geräten betrieben werden kann. Selbst wenn ein Gerät nicht häufig durch ein anderes ersetzt wird, muss es doch gelegentlich zur Reinigung, Einstellung bzw. Wartung ab- und angebaut werden. Entsprechend ist es wünschenswert, dass solche Fahrzeuge mit Aufhängungen versehen sind, die ein einfaches und schnelles An- und Abbauen solcher Geräte ermöglichen.

Geräte wie Mähwerke müssen derart angebracht werden, dass sie in verschiedenen Einsatzhöhen verwendet werden können. Allgemein werden Mähwerke verwendet, um Gras auf eine Höhe zwischen 2,54 und 8,89 cm (1 - 3,5 Inch) zu schneiden. Um die Mähwerke in jeder dieser Höhen zu halten, sind sie an Parallelogramm-Anordnungen angebracht.

Eine derartige Aufhängung, welche ein Mähwerk zwischen den vorderen und rückwärtigen Rädern eines Fahrzeugs hält, geht aus der US-A-5,025,617 hervor, welche durch Bezugnahme in die vorliegende Anmeldung einbezogen wird.

Die in der US-A-5,025,617 gezeigte Aufhängung weist ein Paar von sich quer erstreckenden Hubstreben auf, welche schwenkbar mit einem Fahrzeug und einem Heckbereich eines Anbaugeräts verbunden ist. In einem Frontbereich des Mähwerks ist ein im Wesentlichen rechteckiger Bügel vorgesehen, dessen rückwärtige Verbindungen bzw. Querstreben schwenkbar in Haken aufgenommen werden, die an einem Endbereich des Anbaugeräts und dessen vordere Verbindungen bzw. Querstreben schwenkbar durch an dem Fahrzeug vorgesehenen Haken aufgenommen werden. Die Seitenstreben des Bügels dienen als Zugstreben, um den vorderen Endbereich des Anbaugeräts abzustützen. Die rückwärtigen und vorderen Querstreben bilden die gleich langen Seiten einer Parallelogramm-Anordnung, die eine gleichmäßige und waagrechte Bewegung des Anbaugeräts, wenn es innerhalb seines vertikalen Schneidbereichs verstellt wird, gewährleisten. Die Schwenkverbindungen an den oberen und unteren Endbereichen der zwei Hubstreben und an den oberen und unteren Endbereichen der Querstreben bestimmen die Ecken des Parallelogramms.

Da der Wunsch nach einer verbesserten Schnittqualität zugenommen hat, wurde die Überlappung der Schneidkreise der Mähmesser an Mähwerken erhöht. Um diese Überlappung zur Verfügung zu stellen, wurde die Längserstreckung der Mähwerke erhöht. Werden solche Mähwerke mit Aufhängungen entsprechend der US-A-5,025,617 verwendet, ist es notwendig entweder die vordere oder die rückwärtige Verbindung zwischen dem Mähwerk und dem Fahrzeug zu verlagern. Da Mähwerke zwischen den vorderen und rückwärtigen Rädern eines Fahrzeugs angebracht werden, steht dort nicht genug Platz zur Verfügung, um solch große Mähwerke nach rückwärts zu verschieben. Eine Verschiebung der Schwenkverbindung an dem Frontbereich des Mähwerks unter dem Fahrzeug nach vorn, kann die untere vordere Ecke des Parallelogramms verlagern und die Hubgeometrie, durch die das Mähwerk gleichmäßig angehoben oder abgesenkt wird, wenn die Schnitthöhe eingestellt wird, negativ beeinflussen. Eine Veränderung der Hubgeometrie an dem Fahrzeug wiederum würde alle anderen Mähwerke negativ beeinflussen, welche an dem Fahrzeug angebracht werden könnten, wodurch die Verwendungsmöglichkeiten negativ beeinflusst werden.

Die US-A-5,528,889 zeigt eine Aufhängung für ein Mähwerk eines Fahrzeugs, die vordere und hintere Gestänge aufweist, mittels deren das Mähwerk an einem Fahrzeugkörper derart angebracht ist, dass es angehoben bzw. abgesenkt werden kann.

Das der Erfindung zugrunde liegende Problem wird darin gesehen, dass bekannte Aufhängungen nicht für Geräte unterschiedlicher Größe verwendbar sind, wodurch aufwendige Umbauarbeiten notwendig werden können oder keine optimale Funktion gewährleistet wird.

Dieses Problem wird erfindungsgemäß durch die Lehre der Patentansprüche 1 bzw. 9 gelöst, wobei in den weiteren Patentansprüchen die Lösung in vorteilhafter Weise weiterentwickelnde Merkmale aufgeführt sind.

Auf diese Weise wird eine Aufhängung zur Verfügung gestellt, welche eine gleichbleibende Hubgeometrie aufweist und durch die auch bei größeren Mähwerken eine gleichmäßige Höheneinstellung gewährleistet ist.

In der Zeichnung ist ein nachfolgend näher beschriebenes Ausführungsbeispiel der Erfindung dargestellt. Es zeigt:
- Fig. 1: eine schematische Seitenansicht einer Aufhängung, welche ein großes Mähwerk mit vorderen Schwenkhaken in einer abgesenkten Stellung zeigt,
- Fig. 2: eine schematische Seitenansicht entsprechend Figur 1, wobei sich das Mähwerk in einer angehobenen Stellung befindet,
- Fig. 3: eine vergrößerte, perspektivische Frontansicht, die einen Schwenkhaken und eine sich seitwärts erstreckende Anschlagstange an einem Frontbereich des Mähwerks zeigt,
- Fig. 4: eine vergrößerte, perspektivische Darstellung einer rückwärtigen Querstange eines Bügels, welche in Kehlen der Schwenkhaken aufgenommen wird,
- Fig. 5: eine vergrößerte, schematische Ansicht, welche die Verzerrung der Geometrie eines Verstellparallelogramms darstellt, welche auftritt, wenn an solch einem Mähwerk ein zum Stand der Technik gehörender steifer Haken verwendet wird, wobei sich das Mähwerk in dieser Darstellung in einer abgesenkten Stellung befindet und
- Fig. 6: eine vergrößerte, schematische Darstellung entsprechend Figur 5, die das Mähwerk in seiner angehobenen Stellung zeigt.

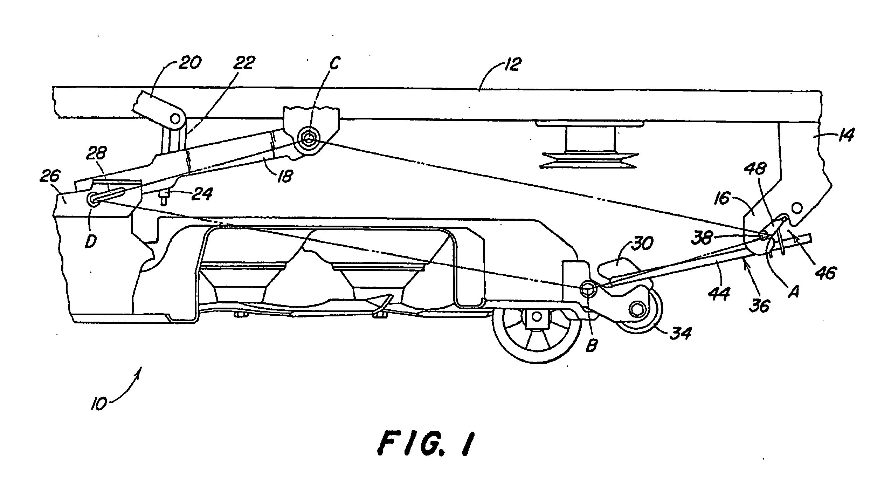

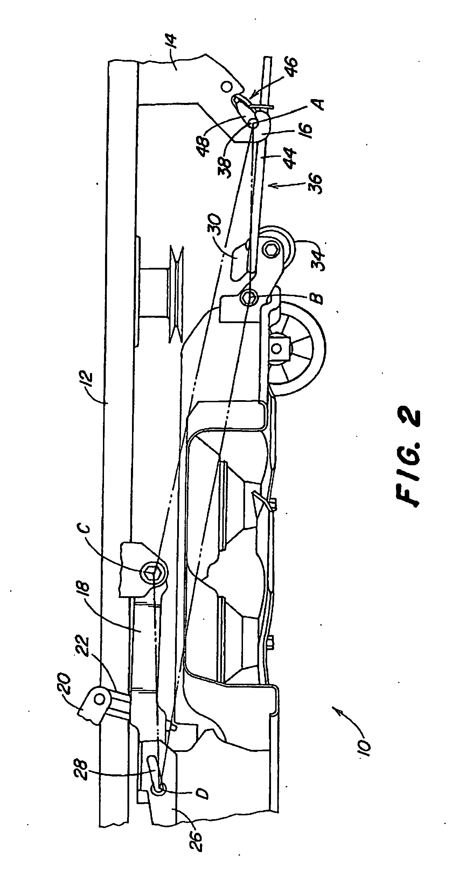

Es wird zuerst auf die Figuren 1 und 2 Bezug genommen, in denen eine Aufhängung zur Abstützung eines Geräts, wie beispielsweise eines Mähwerks 10 eines Fahrzeugs in schematischer Form gezeigt wird. Die Aufhängung wird durch einen Rahmen 12 des Fahrzeugs getragen. An einem vorderen Endbereich des Rahmens 12 ist ein herabhängender Halter 14 vorgesehen, welcher mit einem Paar seitwärts voneinander beabstandeter und nach oben offener Backen oder Haken 16 versehen ist. In einem rückwärtigen Bereich des Rahmens 12 ist ein Paar seitlich beabstandeter und sich nach rückwärts erstreckender Hubstreben 18 vorgesehen. In den schematischen Seitenansichten der Figuren 1 und 2 wird nur ein Halter 14, ein Haken 16 und Hubstreben 18 dargestellt.

Die länglichen Hubstreben 18 sind an ihren oberen Endbereichen schwenkbar an dem Rahmen 12 angebracht. Ein nicht gezeigter, antreibbarer Winkelhebel bzw. Exzenter dient dazu, einen Hebelarm 20 anzuheben und/oder abzusenken, welcher über einen "P" Haken 22 angebunden ist, um die Hubstreben 18 anzuheben oder abzusenken. Jeder "P" Haken 22 weist an seinem unteren Endbereich eine Mutter 24 auf, um seine Länge und somit die Hubstreben 18 einzustellen, um die Höhe des Mähwerks 10 fein abzustimmen.

Zwischen den vorderen Haltern 14 und den Hubstreben 18 wird das Gerät oder das Mähwerk 10 der vorliegenden Erfindung aufgenommen. Das Mähwerk 10 wird durch die Aufhängung zwischen vorderen und rückwärtigen Rädern eines Fahrzeugs oder Traktors gehalten, wodurch ihm erlaubt wird, in und aus seiner Position bewegt zu werden, indem es seitlich zwischen die Räder geschoben wird.

Um das Mähwerk 10 mit der rückwärtigen Hubstrebe 18 zu verbinden, sind an dem Heck des Mähwerks 10 nach oben stehende Halter 26 vorgesehen. Die Halter 26 sind mit Löchern versehen, die Federstifte 28 aufnehmen. Die unteren Endbereiche jeder Hubstrebe 18 sind ebenfalls mit einem Loch versehen, um es ihm zu erlauben, an dem Halter 26 mit dem Federstift 28 angebracht zu werden. Diese Anordnungen sind im Stand der Technik bekannt und es wird vorgeschlagen, die US-A-5,027,617 für weitere Erläuterungen heranzuziehen.

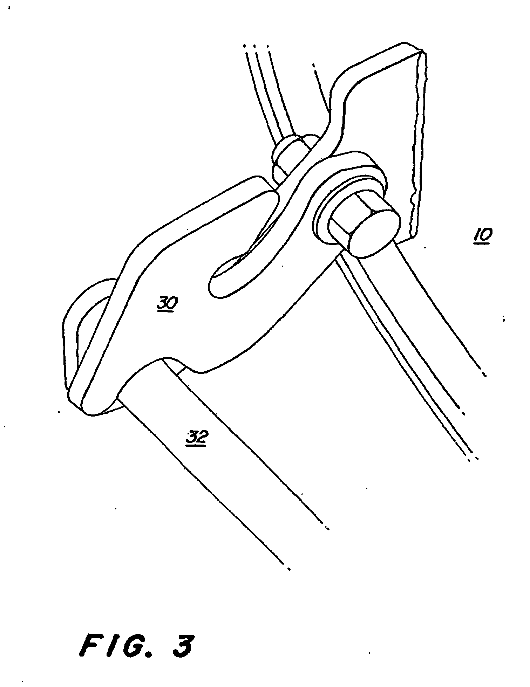

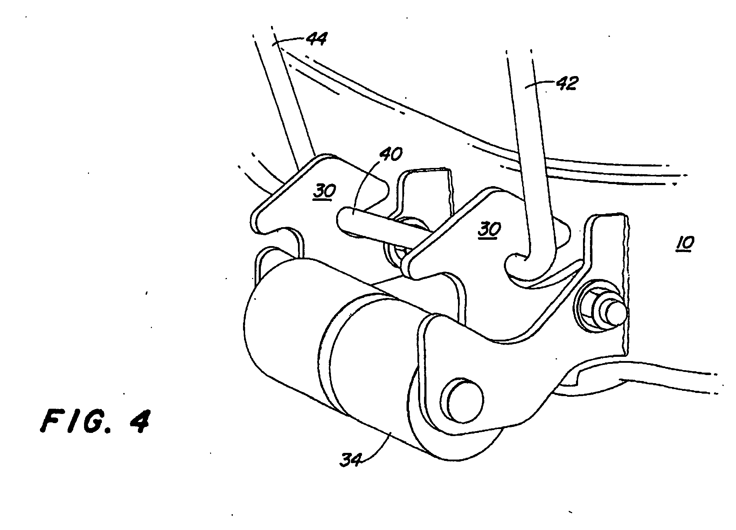

In dem vorderen Endbereich des Mähwerks 10 sind Schwenkhaken 30 vorgesehen, welche den Gegenstand der vorliegenden Erfindung bilden. Wie es in den Figuren 3 und 4 dargestellt wird, ist ein Paar von seitlich voneinander beabstandeten Schwenkhaken 30 schwenkbar mit dem Frontbereich des Mähwerks 10 verbunden. Die Schwenkhaken 30 sind angebracht, um ihnen ein freies Schwingen in einem Bogen zu erlauben. Eine sich quer erstreckende Anschlagstange 32 verhindert eine Bewegung der Schwenkhaken 30 nach unten. Wie es am Besten in Figur 4 gesehen werden kann, ist ein Paar von ein Einschneiden-in-den-Untergrundverhindernden-Rollen 34 vorgesehen, um den Frontbereich des Mähwerks 10 anzuheben, wenn auf Steine oder ähnliche Hindernisse gestoßen wird.

Um den Frontbereich des Mähwerks 10 zu stützen, ist ein rechteckig ausgebildeter Bügel 36 vorgesehen. Der Bügel, welcher in den Figuren 1 und 4 dargestellt wird, weist vordere und rückwärtige, sich quer erstreckende Querstreben 38 und 40, sowie seitlich voneinander beabstandete, sich in Längsrichtung erstreckende Seitenzugstreben bzw. Seitenstreben 42 und 44 auf. Mit der vorderen Querstrebe 38 ist eine Winkelhebelanordnung bzw. ein Exzenter 46 verbunden, der die Seitenstreben 42 und 44 spannen kann. Für eine detaillierte Beschreibung einer solchen Art von Bügelstruktur und Winkelhebel wird auf die US-A-5,025,617 verwiesen.

Wie es in den Figuren 1 und 2 gezeigt wird, stellt die Aufhängung eine ein Parallelogramm aus vier Stangen bildende Hubanordnung zum gleichmäßigen Einstellen des Mähwerks 10 über seinen gesamten Schneidhöhenbereich von 2,54 - 8,89 cm (1 - 3,5 Inch) zur Verfügung. Die Geometrie des Parallelogramms wird durch die durch das Fahrzeug bestimmten Schwenkpunkte A und C und durch die Schwenkpunkte B und D an dem Mähwerk 10 festgelegt. Da die gegenüberliegende erste und rückwärtige Seite des Parallelogramms AB, CD gleich ist und die obere und untere Seite AC, BD gleich ist, hebt und senkt sich das Mähwerk 10 gleichmäßig, wenn die Hebeglieder durch die Winkelhebelanordnung, welche am Heck des Mähwerks 10 vorgesehen ist, angehoben und/oder abgesenkt wird.

Um das Mähwerk 10 an dem Rahmen 12 anzubringen, würde es zwischen die vorderen und rückwärtigen Räder unterhalb des Fahrzeugs eingesetzt. Die rückwärtige Hubstrebe 18 würde zwischen den Haltern 36 angeordnet und die Federstifte 28 würden verwendet werden, um die unteren Endbereiche der Hubstreben 18 mit dem Heck des Mähwerks 10 zu verbinden. Dann würde die rückwärtige Querstrebe 40 des rechteckigen Bügels 36 in die Schwenkhaken 30 an dem Mähwerk 10 eingesetzt werden. Da die Schwenkhaken 30 zu der Anschlagstange 32 schwenken können, wie dies in Figur 3 gezeigt wird, kann die Querstrebe 40 einfach in die Schwenkhaken 30 eingesetzt werden. Dann würde die vordere Querstrebe 38 in den vorderen Haken 16 an dem Fahrzeug eingesetzt werden.

Als nächstes würde ein Griff 48, der mit dem Winkelhebel 46 versetzt verbunden ist, verschwenkt werden, um die Seitenstreben 42 und 44 unter Spannung zu setzen. Wenn Spannung an die Zug- bzw. Seitenstreben 42 und 44 angelegt wird, schiebt sich die rückwärtige Querstrebe 40 in die und innerhalb der Kehlen der Haken 30 in die Stellung, die in Figur 1 gezeigt wird. Wenn die Seitenstreben 42 und 44 gespannt sind, steht es den Schwenkhaken 30 frei, nach oben zu schwingen. Es wird bemerkt werden, dass die rückwärtige Querstrebe 40 des Bügels 36 sich bewegt, um eine Stellung in Reihe zwischen den Achsen A und B einzunehmen. Entsprechend wird die passende Parallelogramm-Geometrie erzielt, um das Mähwerk 10 vertikal durch seine Schnitthöhenbereiche zu bewegen.

Da die Schwenkhaken 30 an dem Frontbereich des Mähwerks 10 schwenken können, ist es einfach, die Querstreben 40 in sie einzubringen. Wenn an die Hubstrebe 18 Spannung angelegt wird, schwingen die Schwenkhaken 30 in eine Reihe mit den Parallelogrammecken A und B. Auf diese Weise, können größere Mähwerke 10 mit vergrößerten Längserstreckungsdimensionen an Fahrzeuge angepasst werden, welche bestehende Parallelogramm-Geometrien aufweisen.

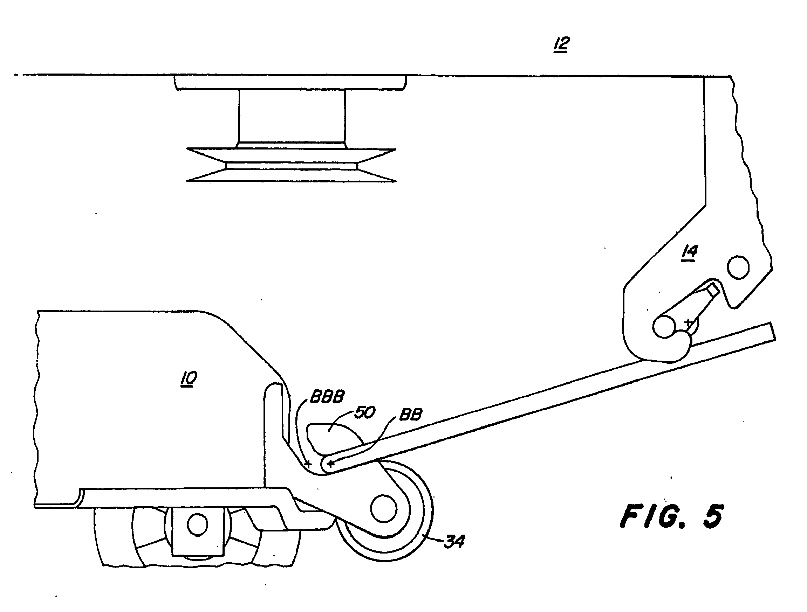

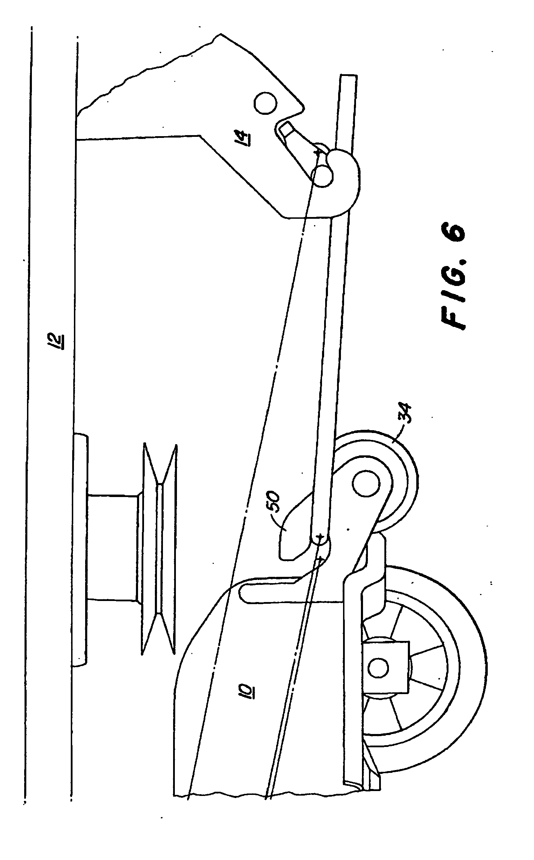

Wie es aus den Figuren 5 und 6 offensichtlich ist, erhält ein Vorsehen eines zum Stand der Technik gehörenden festen Hakens 50 an einem länger ausgestreckten Mähwerk nicht die gewünschte Parallelogramm-Geometrie aufrecht. Wie es aus Figur 5 ersehen werden kann, ist die untere vordere Ecke des Parallelogramms bei BB nach vorn von der gewünschten Stelle BBB versetzt. Wie es in Figur 6 dargestellt ist, liegt die rückwärtige Querstrebe 52 weiterhin vor der gewünschten Parallelogrammecke oder dem Schwenkpunkt, wenn das Mähwerk .10 angehoben wird. Weiter macht es die rückwärtige, obere von zum Stand der Technik gehörenden Haken gehörende Ecke, die während des Betriebs eine Bewegung der Querstrebe nach oben und aus der Kehle unterbindet, auch schwierig, die Querstrebe in den Haken einzubringen, wenn das Mähwerk nach vorn verlängert ist.

Mit der vorliegenden Erfindung wird ein Schwenkhaken für ein Mähwerk zur Verfügung gestellt, der dazu dient die Parallelogramm-Geometrie aufrechtzuerhalten, die eine Verwendung von Mähwerken mit vergrößerten Längsdimensionen ermöglicht.

Durch die Beschreibung der bevorzugten Ausführungsform, wird es offensichtlich werden, dass verschiedene Modifikationen durchgeführt werden können, ohne den Bereich der Erfindung, wie er durch die folgenden Patentansprüche bestimmt wird, zu verlassen.

## Patentansprüche

1. Aufhängung zum höhenveränderlichen Anschließen eines Geräts (10) an einen Rahmen (12) eines Fahrzeugs, mit wenigstens einer Hubstrebe (18), welche sowohl mit dem Rahmen (12) als auch mit einem Endbereich des Geräts (10) schwenkbar verbindbar ist und wenigstens einer Seitenstrebe (42, 44), welche mit dem Rahmen (12) und mit einem an dem gegenüberliegenden Endbereich des Geräts (10) vorgesehenen Anschlussmittel (30) schwenkbar verbindbar ist, **dadurch gekennzeichnet, dass** das Anschlussmittel (30) mit dem Gerät (10) schwenkbar verbunden ist.

2. Aufhängung nach Anspruch 1, **dadurch gekennzeichnet, dass** das Anschlussmittel als ein Schwenkhaken (30) ausgebildet ist, welche eine Kehle zur lösbaren Verbindung des Schwenkhakens (30) mit der Seitenstrebe (42, 44) aufweist.

3. Aufhängung nach Anspruch 2, **gekennzeichnet durch** eine mit der Seitenstrebe (42, 44) verbundene Querstrebe (40), welche **durch** die Kehle des Schwenkhakens (30) aufgenommen werden kann.

4. Aufhängung nach Anspruch 3, **dadurch gekennzeichnet, dass** die Kehle zumindest im Wesentlichen mit den Anlenkpunkt der Seitenstrebe (42, 44) an dem Rahmen (12) als auch mit dem Anlenkpunkt des Anschlussmittels an dem Gerät (10) fluchtet.

5. Aufhängung nach einem oder mehreren der vorherigen Ansprüche, **gekennzeichnet durch** ein Anschlagelement (32), dass die Schwenkbewegung des Anschlussmittels nach unten begrenzt.

6. Aufhängung nach einem oder mehreren der vorherigen Ansprüche, **dadurch gekennzeichnet, dass** die Hubstrebe (18) über eine Winkelhebelanordnung (20) mit dem Rahmen (12) derart verbindbar ist, dass sie zumindest im Wesentlichen vertikal verschwenkt.

7. Aufhängung nach Anspruch 6, **dadurch gekennzeichnet, dass** der Winkelhebel (20) einen Haken (22) aufweist, der an der Hubstrebe (18) angreift bzw. eine mit der Hubstrebe (18) verbundene Querstrebe (38) vorzugsweise in einer Kehle aufnimmt.

8. Aufhängung nach einem oder mehreren der vorherigen Ansprüche, **dadurch gekennzeichnet, dass** die Seitenstrebe(n) (42, 44), Hubstrebe(n) (18) und Querstrebe(n) (38, 40) einen vorzugsweise zumindest im Wesentlichen rechteckigen Rahmen bilden.

9. Gerät bzw. Fahrzeug zur Rasen-, Garten- und Grundstückspflege mit einer Aufhängung nach einem oder mehreren der vorherigen Ansprüche.

## Claims

1. A suspension for height variable attachment of an implement (10) to a frame (12) of a vehicle, with at least one lift link (18) which can be pivotally attached to both the frame (12) and one end region of the implement (10) and at least one side link (42, 44) which can be pivotally attached to the frame (12) and to an attachment means (30) provided at the opposite end region of the implement (10), **characterized in that** the attachment means (30) is pivotally connected to the implement (10).

2. A suspension according to claim 1, **characterized in that** the attachment means is in the form of a pivoted hook (30) which has a throat for releasable connection of the pivoted hook (30) to the side links (42, 44).

3. A suspension according to claim 2, **characterized by** a crosspiece (40) which is connected to the side link (42, 44) and can be received by the throat of the pivoted hook (30).

4. A suspension according to claim 3, **characterized in that** the throat is at least substantially in alignment with the hinge point of the side link (42, 44) on the frame (12) and also to the hinge point of the attachment means on the implement (10).

5. A suspension according to one or more of the preceding claims, **characterized by** a stop element (32) which limits the pivotal movement of the attachment means.

6. A suspension according to one or more of the preceding claims, **characterized in that** the lift link (18) can be so connected to the frame (12) by a cranked lever arrangement (20) that it pivots at least substantially vertically.

7. A suspension according to claim 6, **characterized in that** the cranked lever (20) has a hook (22) which engages on the lift link (18) or receives a crosspiece (38) connected to the lift link (18), preferably in a throat.

8. A suspension according to one or more of the preceding claims, **characterized in that** the side link(s) (42, 44), lift link(s) (18) and crosspiece(s) (38, 40) form a frame which is preferably at least substantially rectangular.

9. An implement or vehicle for care of lawns, gardens and plots with a suspension according to one or more of the preceding claims.

## Revendications

1. Suspension pour un attelage réglable en hauteur d'une machine (10) contre un châssis (12) d'un véhicule, comportant au moins une jambe de force de levage (18) qui peut être reliée de manière pivotante au châssis (12), de même qu'à une zone d'extrémité de la machine (10) et au moins une jambe de force latérale (42, 44), qui peut être reliée de manière pivotante au châssis (12) et à un moyen de raccordement (30) prévu sur une zone d'extrémité opposée de la machine (10), **caractérisée en ce que** le moyen de raccordement (30) est relié de manière pivotante à la machine (10).

2. Suspension selon la revendication 1, **caractérisée en ce que** le moyen de raccordement est réalisé sous forme de crochet pivotant (30), qui comporte une gorge pour l'assemblage amovible du crochet pivotant (30) avec la jambe de force latérale (42, 44).

3. Suspension selon la revendication 2, **caractérisée par** une jambe de force transversale (40), qui est reliée à la jambe de force latérale (42, 44) et qui peut être reçue dans la gorge du crochet pivotant (30).

4. Suspension selon la revendication 3, **caractérisée en ce que** la gorge est alignée au moins sensiblement avec le point d'articulation de la jambe de force latérale (42, 44) sur le châssis (12), de même qu'avec le point d'articulation du moyen de raccordement sur la machine (10).

5. Suspension selon une ou plusieurs des revendications précédentes, **caractérisée par** un élément de butée (32), qui limite vers le bas le mouvement de pivotement du moyen de raccordement.

6. Suspension selon une ou plusieurs des revendications précédentes, **caractérisée en ce que** la jambe de force de levage (18) peut être assemblée au châssis (12) par l'intermédiaire d'un système de levier coudé (20), de telle sorte qu'elle pivote au moins sensiblement verticalement.

7. Suspension selon la revendication 6, **caractérisée en ce que** le levier coudé (20) comporte un crochet (22), qui entre en prise avec la jambe de force de levage (18) ou reçoit de préférence dans une gorge une jambe de force transversale (38) assemblée à la jambe de force de levage (18).

8. Suspension selon une ou plusieurs des revendications précédentes, **caractérisée en ce que** la/les jambe(s) de force latérale(s) (42, 44), la/les jambe(s) de force de levage (18) et la/les jambe(s) de force transversale(s) (38, 40) forment un bâti de préférence au moins sensiblement rectangulaire.

9. Machine ou véhicule pour l'entretien des pelouses, jardins et terrains comportant une suspension selon une ou plusieurs des revendications précédentes.
